# EUROPÄISCHE PATENTSCHRIFT

(11) **EP 3 948 013 B1**
(45) Veröffentlichungstag und Bekanntmachung des Hinweises auf die Patenterteilung: **29.05.2024**
(21) Anmeldenummer: 20713252.3
(22) Anmeldetag: 18.03.2020
(51) Int. Cl.: F16F 13/00, B62J 1/08

(54) **VERSTELLBARE SATTELSTÜTZENANORDNUNG**
ADJUSTABLE SEAT POST ARRANGEMENT
ARRANGEMENT SUPPORT DE SELLE RÉGLABLE

(30) Priorität: 28.03.2019 CH 4072019
(43) Veröffentlichungstag der Anmeldung: 09.02.2022
(73) Patentinhaber: BMC Switzerland AG, 2540 Grenchen (CH)
(72) Erfinder: CHRIST, Stefan, 2500 Biel (CH); PONCET, Jean-Martin, 3053 Diemerswil (CH); STÄMPFLI, Peter, 3283 Kallnach (CH)
(74) Vertreter: Troesch Scheidegger Werner AG
(86) Internationale Anmeldenummer: PCT/EP2020/057512
(87) Internationale Veröffentlichungsnummer: WO 2020/193326

(56) Entgegenhaltungen:
- WO-A1-2019/052654
- CN-A- 104 773 243
- CN-U- 203 623 830
- DE-C- 874 256
- JP-A- S5 647 374
- JP-U- H0 375 087
- TW-A- 201 838 863
- US-A1- 2004 208 687
- US-A1- 2011 148 067
- US-A1- 2017 158 281

## Beschreibung

### TECHNISCHES GEBIET

Die vorliegende Erfindung betrifft eine verstellbare Sattelstützenanordnung, insbesondere für Fahrräder.

### STAND DER TECHNIK

Es sind verstellbare Sattelstützenanordnungen bekannt, welche eine Druckfeder oder einen einfach wirkenden Pneumatikzylinder aufweisen, mit welchen eine Sattelstütze ausfahrbar, bzw. hochfahrbar ist. Um die Sattelstütze wieder einzufahren, muss sich der Fahrer auf den Sattel setzen und diesen mit seinem Gewicht niederdrücken. Eine tiefe Position des Sattels ist vor allem im holprigen Gelände vorteilhaft, da damit verhindert werden kann, dass der Fahrer auf den Sattel prallt. Wenn sich der Fahrer bereits im holprigen Gelände befindet, ist das Niederdrücken des Sattels mit dem Gesäss kritisch.

Dokument US 2011/148067 A1 offenbart den Oberbegriff des Anspruchs 1.

### BESCHREIBUNG DER ERFINDUNG

Eine Aufgabe der vorliegenden Erfindung besteht darin, eine Sattelstützenanordnung bereitzustellen, bei welcher der Sattel, bzw. die Sattelstütze auch im holprigen Gelände risikolos eingefahren werden kann. Weiter soll die Anordnung eine einfache und gewichtsparende Konstruktion aufweisen.

Diese Aufgabe wird durch eine Sattelstützenanordnung mit den Merkmalen des Anspruchs 1 gelöst. Weitere Ausführungsformen der Sattelstützenanordnung, sowie eines Fahrradrahmens mit einer erfindungsgemässen Sattelstützenanordnung sind durch die Merkmale von weiteren Ansprüchen definiert.

Eine erfindungsgemässe verstellbare Sattelstützenanordnung umfasst eine Sattelstütze, einen Pneumatikzylinder, einen Druckbehälter, ein Regelventil und eine Ventilbetätigung. Die Sattelstütze und der Pneumatikzylinder erstrecken sich entlang einer ersten Achse. Die Sattelstütze ist mit einem Zylinderrohr des Pneumatikzylinders wirkverbunden. Der Pneumatikzylinder umfasst eine erste Kammer, welche sich auf einer ersten Seite eines Kolbens des Pneumatikzylinders befindet und eine offene zweite Kammer, welche sich auf einer der ersten Seite gegenüberliegenden zweiten Seite des Kolbens befindet. Das Regelventil ist über die Ventilbetätigung betätigbar. Druckluft ist vom Druckbehälter über Leitungen und das Regelventil der ersten Kammer zuführbar, wobei eine erste Leitung vom Regelventil zur ersten Kammer führt. In der offenen zweiten Kammer ist eine Druckfeder vorgesehen, welche sich in der Richtung der ersten Achse erstreckt und welche auf den Kolben wirkt. Diese Bauweise hat den Vorteil, dass die Sattelstütze mit einer Ventilbetätigung eingefahren werden kann, ohne dass der Benutzer, d.h. der Fahrradfahrer den Sattel berühren muss. Er kann somit frei entscheiden, wann und wie er den Sattel runterfahren will. Das Hochfahren erfolgt mittels der Druckfeder, wodurch keine Druckluft verbraucht wird. Zwischen dem Druckbehälter und dem Regelventil kann ein Druckreduzierventil angeordnet sein, wodurch der Druck im Pneumatikzylinder kleiner ist als im Druckbehälter, wodurch sich der Verbrauch von Druckluft reduziert. Diese Bauweise ist auf Sattelstützen mit unterschiedlichen Querschnitten anwendbar, beispielsweise kreisrunde, ovale oder mehreckige. Die offene zweite Kammer umfasst mindestens eine Öffnung und ist daher immer mit der Umgebung verbunden.

In einer weiteren Ausführungsform umfasst die erste Leitung einen Abschnitt, der durch eine Kolbenstange des Pneumatikzylinders geführt ist. Durch diese Bauweise kann eine Leitungsführung im Innern des Pneumatikzylinders, bzw. im Innern der Sattelstütze realisiert werden. Dies braucht weniger Bauteile, vereinfacht die Konstruktion und reduziert das Konstruktionsgewicht.

In einer Ausführungsform ist in einer ersten Endstellung des Regelventils und in einer Mittelstellung des Regelventils die erste Kammer über die erste Leitung mit der Umgebung verbunden. In einer der ersten Endstellung entgegengesetzten zweiten Endstellung des Regelventils ist die erste Kammer über die erste Leitung und eine Zufuhrleitung mit dem Druckbehälter verbunden.

In einer weiteren Ausführungsform umfasst die Ventilbetätigung ein von einem Benutzer bedienbares Bedienelement und eine Kraftübertragung, mit welcher eine vom Benutzer beim Bedienelement erzeugte Kraft zum Regelventil übertragbar ist, um dieses zu betätigen. Das Bedienelement kann am Fahrradlenker oder in einem lenkernahen Bereich am Fahrradrahmen angeordnet sein, wodurch eine gute Zugänglichkeit und Bedienbarkeit durch den Benutzer, bzw. durch den Fahrer gegeben ist.

In einer weiteren Ausführungsform umfasst die Kraftübertragung einen Bowdenzug oder eine Druckleitung. Bowdenzüge oder Druckleitungen sind herkömmliche Elemente, um bei einem Fahrrad Kräfte zu übertragen. Sie haben eine lange Lebensdauer und funktionieren zuverlässig. Bowdenzüge haben den Vorteil, dass sie sowohl Zugkräfte als auch Druckkräfte übertragen können.

In einer Ausführungsform ist mindestens eine Feder vorgesehen, welche auf das Regelventil einwirken kann und dieses entlang der ersten Achse in eine vorbestimmte Lage drücken kann. Es ist möglich den Bowdenzug mit Federn zu kombinieren, um bei einer Betätigung des Bowdenzuges eine Rückstellkraft erzeugen zu können. Beispielsweise kann eine Feder vorgesehen sein, welche nur in einer Richtung eine Rückstellkraft erzeugen kann. In diesem Fall könnte anstelle des Bowdenzuges nur ein Draht verwendet werden, welcher im Wesentlichen nur Zugkräfte übertragen kann. Wird beispielsweise mittels eines Hebels am Draht gezogen, so wird die Feder zusammengedrückt und die Rückstellkraft erhöht sich dementsprechend. Wird der Hebel losgelassen, d.h. die Zugkraft am Draht reduziert, so bewirkt die Federkraft eine Rückstellung des Hebels. Wenn der Hebel und dementsprechend auch das Regelventil in einer bestimmten Stellung verharren soll, können Rastelemente vorgesehen werden. In diesem Fall bedarf es einer Entrastung des Hebels, um diesen aus der bestimmten Stellung auslenken zu können.

In einer weiteren Ausführungsform umfasst die Ventilbetätigung ein von einem Benutzer bedienbares Bedienelement, einen Ventilaktuator und eine drahtlose Signalübertragung, mit welcher eine vom Benutzer mit dem Bedienelement erzeugtes Signal zum Ventilaktuator übertragbar ist und durch diesen das Regelventil betätigbar ist. Eine drahtlose Signalübertragung benötigt keine Leitungsführung innerhalb oder ausserhalb des Rahmens. Dies ist vorteilhaft, da die interne Leitungsführung den Rahmen schwächt und durch zusätzliche Versteifungen schwerer macht und die externe Leitungsführung führt zu erhöhtem Luftwiderstand aufgrund der Wirbelbildung an den Leitungen während der Fahrt.

In einer weiteren Ausführungsform umfasst das Bedienelement einen Hebel, einen Drehring, wie er beispielsweise bei einer Gripshift-Schaltung verwendet wird, mindestens einen Schalter oder mindestens zwei Druckknöpfe. Es kann jedoch jedes Bedien- oder Schaltelement verwendet werden, mit welchem mindestens drei Positionen (verriegelt, frei, Einfahren) einstellbar sind. Es können auch mehrere Bedienelemente verwendet werden, mit welchen zusammen die mindestens drei Positionen, bzw. Zustände einstellbar sind. Die Bedienelemente sind allgemein so ausgestaltet, dass sie vom Fahrer einfach bedient, bzw. betätigt werden können. Die Betätigung kann einhändig oder zweihändig erfolgen. Beispielsweise kann ein Hebel im Bereich eines Haltegriffs des Fahrradlenkers angeordnet sein oder es kann beispielsweise ein oder zwei Knöpfe für das Verriegeln und das Freigeben der Sattelstütze im Bereich eines ersten Haltegriffs eines Fahrradlenkers angeordnet sein und ein zweiter Knopf für das Einfahren kann im Bereich eines zweiten Haltegriffs des Fahrradlenkers angeordnet sein.

Erfindungsgemäss umfasst die Sattelstützenanordnung eine Arretiervorrichtung, wobei die Arretiervorrichtung einen Verriegelungsbolzen und ein Verstellelement umfasst. Der Verriegelungsbolzen kann in einer Fixierstellung des Verstellelements in eine Positionsbohrung in der Sattelstütze eingreifen. Der Verriegelungsbolzen und das Verstellelement sind derart ausgebildet, dass eine Verschiebung des Verstellelements aus der Fixierstellung in der Richtung einer zur Längsachse des Pneumatikzylinders parallelen ersten Achse zu einer Verschiebung des Verriegelungsbolzens in einer zur ersten Achse senkrechten zweiten Achse führt. Die Arretiervorrichtung umfasst einen Verriegelungsbolzen und ein Verstellelement, welche derart ausgebildet sind, dass eine Verschiebung des Verstellelements entlang der ersten Achse zu einer Verschiebung des Verriegelungsbolzens in einer zur ersten Achse senkrechten zweiten Achse führt. Der Verriegelungsbolzen ist in einer Fixierstellung in einer Positionsbohrung der Sattelstütze angeordnet und der Verriegelungsbolzen ist in einer Freistellung ausserhalb der Positionsbohrungen angeordnet. Dies ist eine kompakte Bauweise, welche es erlaubt, die Arretiervorrichtung vollständig im Innern des Sitzrohres unterzubringen. Die Anfälligkeit für Verschmutzung ist somit verringert und die Rahmen interne Anordnung verringert den Luftwiderstand während dem Fahren. Beispielsweise kann das Verstellelement eine Führungsnut umfassen, in welcher ein Führungsstift des Verriegelungsbolzens führbar ist.

Erfindungsgemäss ist das Verstellelement mit einem Betätigungselement des Regelventils wirkverbunden, sodass bei einer Betätigung des Betätigungselements gleichzeitig das Verstellelement betätigbar ist. Die Kombination der beiden Elemente erlaubt eine kompakte Bauweise mit einer geringen Anzahl an beteiligten Elementen.

In einer Ausführungsform umfasst in einer Initialposition des Bedienelements, das Regelventil die erste Endstellung und der Verriegelungsbolzen umfasst die Fixierstellung. In einer ersten Position des Bedienelements umfasst das Regelventil die Mittelstellung und der Verriegelungsbolzen umfasst die Freistellung. In einer zweiten Position des Bedienelements umfasst das Regelventil die zweite Endstellung und der Verrieglungsbolzen umfasst die Freistellung.

Die erwähnten Ausführungsformen der Sattelstützenanordnung lassen sich in beliebiger Kombination einsetzen, sofern sie sich nicht widersprechen.

Bei einem Fahrradrahmen mit einer erfindungsgemässen Sattelstützenanordnung ist die Sattelstützenanordnung mit einer Fixierung in einem Sitzrohr des Fahrradrahmens befestigt. Die Befestigung kann vollständig im Rohrinnern erfolgen oder sie kann teilweise am Rohräusseren vorgesehen sein. Beispielsweise kann bei einem Rahmenrohr mit einem kreisrunden Querschnitt eine Sattelstützenanordnung mit kreisrundem Querschnitt eingeschraubt werden. Diese Bauweise resultiert in einem kleineren Luftwiderstand während dem Fahren. Alternativ kann die Sattelstützenanordnung in das Rahmenrohr eingeschoben werden und von aussen mit Schrauben oder Bolzen oder dergleichen bezüglich der Rohrlängsrichtung fixiert werden. Beispielsweise kann diese Praxis bei Rohrrahmen bzw. Sattelstützenanordnungen mit nicht-kreisrunden Querschnitten angewandt werden.

In einer weiteren Ausführungsform ist die Fixierung am Regelventil der Sattelstützenanordnung angeordnet. Somit wird kein zusätzliches Element für die Befestigung, bzw. Fixierung benötigt, was die Baugrösse und das Gewicht der Konstruktion verringert.

In einer weiteren Ausführungsform ist der Druckbehälter gemeinsam einstückig mit einem Unterrohr des Rahmens ausgebildet. Durch diese Bauweise kann das Gewicht reduziert werden und es entstehen während der Fahrt keine unnötigen Luftverwirbelungen, welche den Fahrtwiderstand, bzw. den Luftwiderstand erhöhen. Alternativ kann der Druckbehälter am Rahmenäussern befestigt sein. Dies verbessert die Zugänglichkeit und erleichtert das Auswechseln des Druckbehälters. Es können auch mehr als ein Druckbehälter am, bzw. im Rahmen vorgesehen sein, um das Gesamtvolumen des unter Druck stehenden Fluides zu erhöhen.

In einer weiteren Ausführungsform sind die Leitungen und/oder die Kraftübertragung zumindest teilweise im Rahmeninnern führbar. Dies verringert die Schadensanfälligkeit und reduziert den Luftwiderstand bei der Fahrt.

Die erwähnten Ausführungsformen des Fahrradrahmens lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine schematische Seitenansicht einer erfindungsgemässen verstellbaren Sattelstützenanordnung in einem Fahrradrahmen;
Fig. 2 eine seitliche Schnittansicht durch eine erfindungsgemässe Sattelstützenanordnung im eingefahrenen und verriegelten Zustand;
Fig. 3 eine vergrösserte Ansicht des Regelventils und der Arretiervorrichtung der Figur 2;
Fig. 4A die Sattelstützenanordnung von Figur 2 im eingefahrenen und entriegelten Zustand;
Fig. 4B die Sattelstützenanordnung von Figur 2 im ausgefahrenen und verriegelten Zustand;
Fig. 4C die Sattelstützenanordnung von Figur 2 im ausgefahrenen und entriegelten Zustand; und
Fig. 5 einen Rückstellmechanismus für eine erfindungsbemässe Sattelstützenanordnung.

### DETAILLIERTE BESCHREIBUNG DER ERFINDUNG

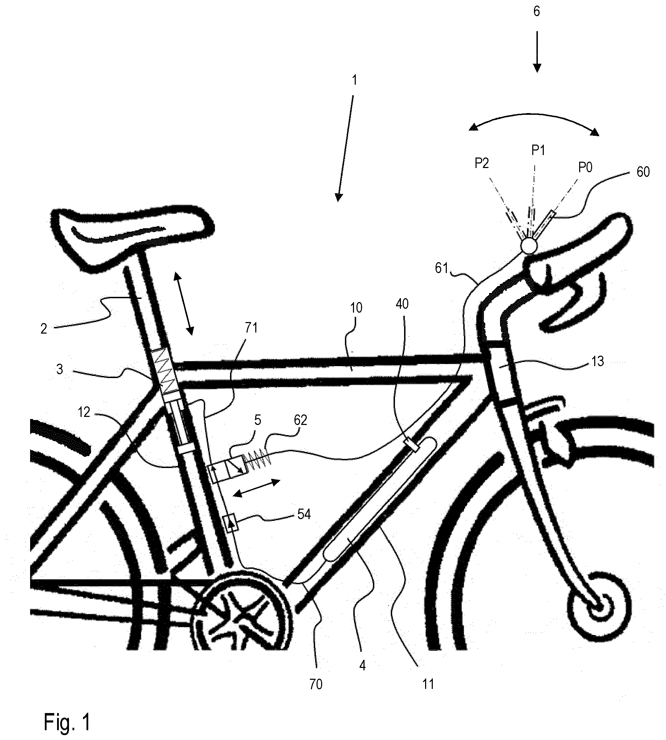

Die Figur 1 zeigt eine schematische Seitenansicht einer erfindungsgemässen verstellbaren Sattelstützenanordnung in einem Fahrradrahmen 1. Der Fahrradrahmen 1 weist ein Oberrohr 10, ein Unterrohr 11, ein Sitzrohr 12 und ein Steuerrohr 13 auf, welche miteinander verbunden sind. Die Sattelstützenanordnung weist eine Sattelstütze 2, einen Pneumatikzylinder 3, einen Druckbehälter 4, ein Regelventil 5 und eine Ventilbetätigung 6 auf. Die Sattelstütze 2 ist mit dem Pneumatikzylinder 3 wirkverbunden. Druckluft ist vom Druckbehälter 4 über Leitungen 70;71 und das Regelventil 5 dem Pneumatikzylinder 3 zuführbar. Zwischen dem Druckbehälter 4 und dem Regelventil 5 ist ein Druckreduzierventil 54 vorgesehen. Das Regelventil 5 ist über die Ventilbetätigung 6 betätigbar. Der Pneumatikzylinder 3 ist einfachwirkend und mit einer rückführenden Druckfeder versehen. Eine erste Leitung 71 führt vom Regelventil 5 zu zum Pneumatikzylinder 3. Eine Zufuhrleitung 70 führt vom Druckbehälter 4 zum Regelventil 5. Der Druckbehälter 4 ist über ein Füllventil 40 mit Druckluft befüllbar. Dargestellt ist ein Druckbehälter 4, der im Innern des Unterrohres 11 angeordnet ist und das Füllventil 40 ragt aus dem Unterrohr 11 auf seiner nach oben gerichteten Seite. Die Ventilbetätigung 6 weist ein Bedienelement 60 in der Form eines Schwenkhebels 60 und eine Kraftübertragung 61 in der Form eines Bowdenzuges auf und ist mit einer Endbefestigung 62 am Regelventil 5 angeordnet. Mit einer Bewegung des Hebels 60 und des Bowdenzugs 61 kann das Regelventil 5 betätigt werden. In einer Initialposition P0 des Hebels 60 befindet sich das Regelventil 5 in einer ersten Endstellung, in welcher die erste Leitung 71 durch das Regelventil 5 verschlossen ist. In einer ersten Position P1 des Hebels 60 befindet sich das Regelventil 5 in einer Mittelstellung, in welcher die erste Leitung durch das Regelventil 5 verschlossen ist. In einer zweiten Position P2 des Hebels 60 befindet sich das Regelventil 5 in einer zweiten Endstellung, in welcher Druckluft vom Druckbehälter 4 über die Zufuhrleitung 70, das Regelventil 5 und die erste Leitung 71 dem Pneumatikzylinder 3 zuführbar ist.

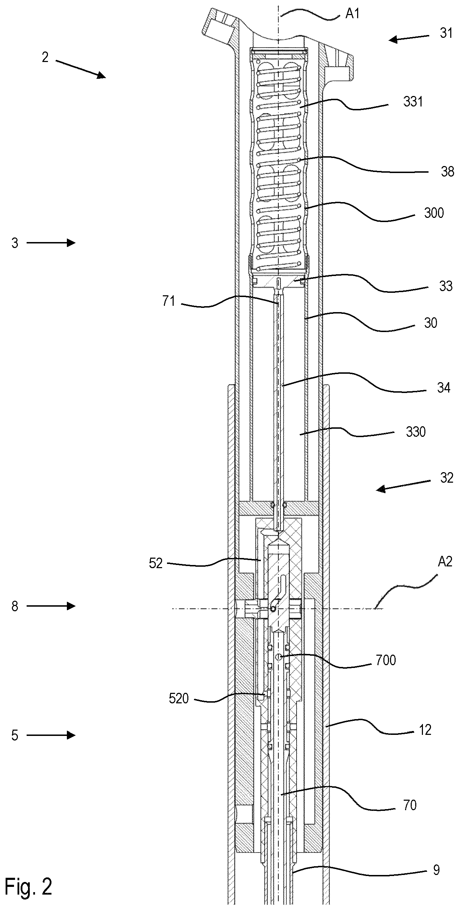

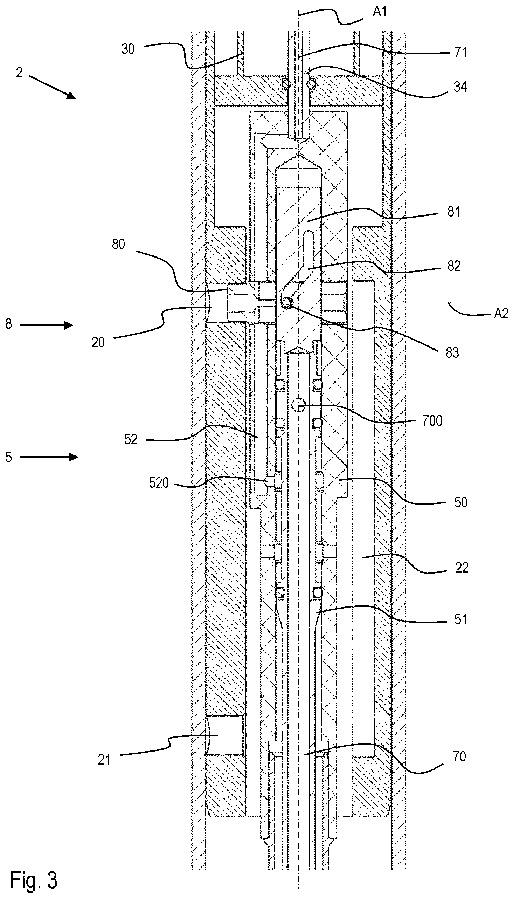

Die Figur 2 zeigt eine seitliche Schnittansicht durch eine erfindungsgemässe Sattelstützenanordnung im eingefahrenen und verriegelten Zustand und die Figur 3 zeigt eine vergrösserte Ansicht des Regelventils 5 und der Arretiervorrichtung 8 der Figur 2. Dargestellt ist eine rohrförmige Sattelstütze 2, in welcher ein Pneumatikzylinder 3 ein Regelventil 5 und eine Arretiervorrichtung 8 angeordnet sind. Das Regelventil 5 ist durch eine Fixierung 9, in der Form einer Hülse, mit am Sitzrohr 12 des Fahrradrahmens befestigt. Die Sattelstütze 2 ist verschiebbar entlang einer ersten Achse A1 im Sitzrohr 12 angeordnet. Die erste Achse A1 entspricht der Längsachse des Sitzrohres 12, bzw. der Sattelstütze 2. Auf der bezüglich des Sitzrohres 12 entfernten Seite des Sattelrohres 2 befinden sich Schraubenaufnahmen zur Befestigung eines Fahrradsattels. Der Pneumatikzylinder 3 umfasst ein Zylinderrohr 30, welches konzentrisch im Innern der Sattelstütze 2 angeordnet ist und mit dieser fest verbunden ist. Ein offener Zylinderkopf 31 befindet sich auf der Seite der Sattelstütze 2, welche nicht in das Sitzrohr 12 eingeführt wird. Ein Zylinderboden 32 befindet sich auf der dem Zylinderkopf 31 gegenüberliegenden Seite des Zylinderrohres 30. Zwischen dem Zylinderkopf 31 und dem Zylinderboden 32 ist ein Zylinderkolben 33 angeordnet, welcher dicht entlang der ersten Achse A1 verschiebbar ist. Der Zylinderkolben 33 unterteilt das Zylinderrohr in eine erste Kammer 330 und in eine offene zweite Kammer 331. Der Zylinderkolben 33 ist mit einer Kolbenstange 34 verbunden, welche dicht durch eine Öffnung im Zylinderboden 32 geführt ist. Die Kolbenstange 34 ist auf der dem Zylinderkolben 33 gegenüberliegenden Seite des Zylinderbodens 32 mit dem Regelventil 5 verbunden. In de nach aussen offenen zweiten Kammer 331 ist eine Druckfeder 38 angeordnet, welche entlang der ersten Achse A1 auf den Zylinderkopf 31 und auf den Zylinderkolben 33 wirkt. Ein Federgehäuse 300 ist fluchtend mit dem Zylinderrohr 30 an diesem angeordnet und umfasst einen offenen Teil der zweiten Kammer 331. Im dargestellten eingefahrenen Zustand der Sattelstütze 2 umfasst die zweite Kammer 331 im Wesentlichen nur den Innenraum des Federgehäuses 300. In der Mantelfläche des Federgehäuses 300 sind Öffnungen vorgesehen, durch welche Luft in die zweite Kammer 331 ein- oder ausströmen kann. Das Regelventil 5 umfasst einen rohrförmigen Ventilkörper 50 und einen darin konzentrisch angeordneten Ventilstössel 51. Die Kolbenstange 34 ist mit dem Ventilkörper 50 verbunden. Der Ventilstössel 51 ist in der Richtung der ersten Achse A1 im Ventilkörper 51 verschiebbar angeordnet. Der Ventilstössel 51 ist hülsenförmig und weist konzentrisch in seinem Innern die Zufuhrleitung 70 auf. Ein erster Kanal 52 erstreckt sich im Innern des Ventilkörpers 50 parallel zum Ventilstössel 51 von einem mittleren Bereich des Ventilkörpers 50 bis zu einem Endbereich, an welchem die Kolbenstange 34 befestigt ist. Im Ventilstössel 51 ist eine radial ausgerichtete Bohrung 700 vorgesehen, welche vom Innern des Stössels 51 nach aussen führt. Im ersten Kanal 52 ist eine radial ausgerichtete Bohrung 520 vorgesehen, welche den ersten Kanal 52 mit der Aufnahme des Stössels 51 verbindet. Am Stössel 51 sind beabstandet zur Bohrung 700, beidseitig bezüglich der ersten Achse A1 Dichtungen vorgesehen. Ein gegen den Pneumatikzylinder 3 gerichtetes Ende des Ventilstössels 51 umfasst ein Verstellelement 81 der Arretiervorrichtung 8. Das Verstellelement 81 umfasst eine Führungsnut 82, in welcher ein Verstellelement 83 eines Verriegelungsbolzens 80 der Arretiervorrichtung 8 führbar ist. Die Führungsnut 82 erstreckt sich im Wesentlichen in der Richtung der ersten Achse A1 über einen Bereich des Verstellelements 81. Die Führungsnut 82 erstreckt sich von einem zur ersten Achse A1 beabstandeten Bereich in einem ersten Abschnitt parallel zur ersten Achse A1, in einem zweiten Abschnitt schräg vom ersten Abschnitt zu einem zur ersten Achse A1 beabstandeten Bereich, welche dem ersten Bereich bezüglich der ersten Achse A1 gegenüberliegt. Der erste Abschnitt hat eine Länge, welcher im Wesentlichen den Abmessungen des Verstellelements 83 entspricht. Der zweite Abschnitt erstreckt sich im Wesentlichen unter einem Winkel von 45° bezüglich der ersten Achse A1. Die Länge des dritten Abschnitts ist ein Vielfaches der Länge des ersten Abschnittes. Der Verriegelungsbolzen 80 erstreckt sich entlang einer zur ersten Achse A1 senkrechten zweiten Achse A2. Der Verriegelungsbolzen ist im Wesentlichen zylinderförmig und weist eine Ausnehmung auf, welche sich über einen Bereich der Länge des Verriegelungsbolzen 80 durch diesen hindurch erstreckt. Die beiden verbleibenden Teile des Verriegelungsbolzen 80 seitlich der Ausnehmung bilden eine Aufnahme für einen Führungsbolzen 83. Der Führungsbolzen 83 erstreckt sich quer zur Ausnehmung durch diese hindurch. Der Führungsbolzen 83 ist ausgebildet, um in der Führungsnut 82 geführt werden zu können. In der dargestellten Fixierstellung ragt der Verriegelungsbolzen 80 auf einer Seite über den Umfang des Ventilkörpers 50 und greift in eine Positionsbohrung 20 in der Sattelstütze 2 ein. Die Positionsbohrung 20 erstreckt sich im Wesentlichen entlang der zweiten Achse A2. Eine Verschiebung des Verstellelements 81 aus der ersten Endstellung entlang der ersten Achse A1 bewirkt, durch die Gestaltung der Führungsnut 82 und des Führungsbolzens 83, eine Verschiebung des Verriegelungsbolzens 80 in der Richtung der zweiten Achse A2, wodurch dieser aus der Positionsbohrung 20 ausgefahren wird und auf der Seite der Positionsbohrung 20 nicht mehr über den Umfang des Ventilkörpers 50 ragt. Nach der Verschiebung des Verriegelungsbolzens 80 ragt dieser auf der der Positionsbohrung 20 gegenüberliegenden Seite über den Umfang des Ventilkörpers 50. Auf der der Positionsbohrung 20 gegenüberliegenden Seite ist in der Sattelstütze 2 eine Ausnehmung 22 vorgesehen, in welcher der Verriegelungsbolzen 80 aufgenommen und entlang der ersten Achse A1 verschoben werden kann. Die Ausnehmung 22 erstreckt sich im Wesentlichen entlang der ersten Achse A1 über den Bereich aller Positionsbohrungen 20,21. Die Zufuhrleitung 70 führt in einem zentrischen Rohr ins Regelventil 5. Die erste Leitung 71 umfasst einen ersten Kanal 52 im Regelventil 5 und einen Kanalabschnitt, welcher zentrisch durch die Kolbenstange 34 des Pneumatikzylinders 3, bis vor dessen Zylinderkolben 33, in die erste Zylinderkammer 330 führt. In der dargestellten ersten Endstellung des Regelventils 5 ist die Bohrung 700 des Ventilstössels 51 in der Richtung der ersten Achse A1 versetzt zur Bohrung 520 des ersten Kanals 52 des Ventilkörpers 50 angeordnet, wodurch die erste Zylinderkammer 330 durch das Regelventil 5 von der Zufuhrleitung 70 getrennt ist.

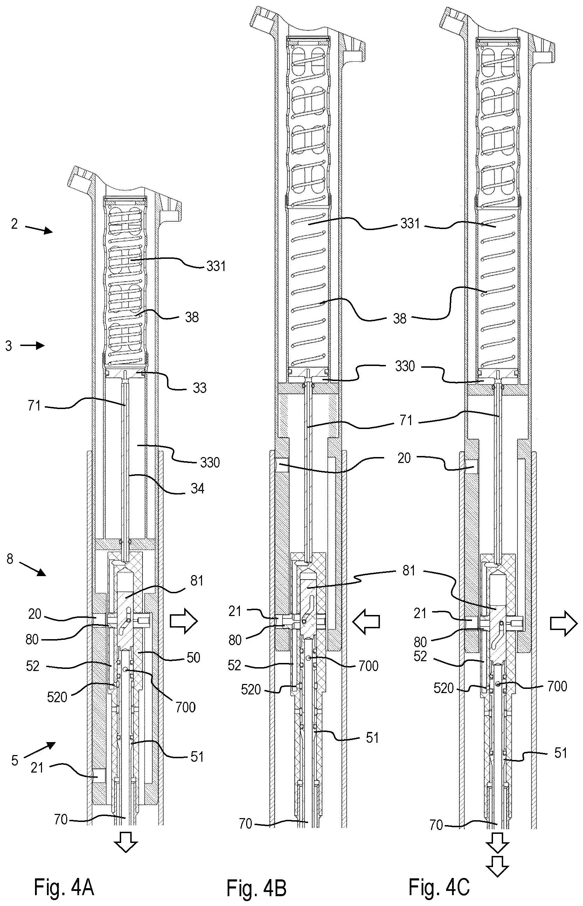

Die Figur 4A zeigt die Sattelstützenanordnung von Figur 2 im eingefahrenen und entriegelten Zustand. Durch das Verschieben des Ventilstössels 51, bzw. des Verstellelements 81 entlang der ersten Achse A1 vom Pneumatikzylinder 3 weg, verschiebt sich der Verriegelungsbolzen 80 in der Richtung der zweiten Achse A2 aus der Positionsbohrung 20, wie dies im Zusammenhang mit der Figur 3 detailliert beschrien wurde. In der dargestellten Mittelstellung des Regelventils 5 kann Luft, welche sich in der ersten Kammer 330 befindet, durch die erste Leitung 71, d.h. durch den Kanal in der Kolbenstange 34, den ersten Kanal 52 und die Bohrung 520 in die Umgebung entweichen. Dadurch, dass die erste Kammer 30 eine Verbindung zur Umgebung hat und dadurch, dass die Feder 38 auf den Zylinderkolben 33 drückt, kann die Sattelstütze 2 selbstständig nach oben verfahren. Nach dem Erreichen der Endposition, welche durch einen nicht dargestellten Anschlag definiert sein kann, kann die Sattelstütze 2 nicht mehr weiter in der gleichen Richtung weiter verschoben werden. In der Endposition ist der Verriegelungsbolzen 80 mit der entsprechenden Positionsbohrung 21 ausgerichtet. Durch das Verschieben des Verstellelements 81, bzw. des Ventilstössels 51 in die erste Endposition, verschiebt sich der Verriegelungsbolzen 80 in die Positionsbohrung 21, gleichzeitig wird eine Verbindung zwischen der ersten Druckkammern 330 und der Umgebung hergestellt. Dies ist in der Figur 4B dargestellt. Die Figur 4B zeigt die Sattelstützenanordnung von Figur 2 im ausgefahrenen und verriegelten Zustand.

Die Figur 4C zeigt die Sattelstützenanordnung von Figur 2 im ausgefahrenen und entriegelten Zustand. Durch das Verschieben des Ventilstössels 51, bzw. des Verstellelements 81 vom Pneumatikzylinder 3 weg, verschiebt sich der Verriegelungsbolzen 80 aus der Positionsbohrung 21. Gleichzeitig wird von der Zufuhrleitung 70 Druckluft über das Regelventil 5 und die erste Leitung 71 der ersten Druckkammer 330 zugeführt. Die Druckfeder 38 ist derart bemessen, dass sie das Eigengewicht der Sattelstütze 2, eines daran befestigten Sattels und allfällige Reibungskräfte überwinden kann. Der in der ersten Druckkammer 330 wirkbare Druck ist derart bemessen, dass die auf den Zylinderkolben 33 wirkende resultierende Kraft grösser ist als die maximal wirkende Federkraft. Dementsprechend wird die Sattelstütze 2 aufgrund des Unterschiedes der auf den Zylinderkolben 33 entgegengesetzt wirkenden Kräfte entlang der ersten Achse A1 nach unten geschoben. Nach dem Erreichen der Endposition, welche durch einen nicht dargestellten Anschlag definiert sein kann, kann die Sattelstütze 2 nicht mehr weiter in der gleichen Richtung weiter verschoben werden. In der Endposition ist der Verriegelungsbolzen 80 mit der entsprechenden Positionsbohrung 20 ausgerichtet. Durch das Verschieben des Verstellelements 81 in die erste Endposition, verschiebt sich der Verriegelungsbolzen 80 in die Positionsbohrung 20, gleichzeitig wird eine Verbindung zwischen der ersten Druckkammer 330 und der Umgebung hergestellt. Dies ist in der Figur 2 dargestellt. Selbstverständlich ist auch eine Ausgestaltung des Verstellelements 81, bzw. des Ventilstössels 51 möglich, bei welcher eine Verschiebung des Verstellelements 81 in der zum Pneumatikzylinder 3 entgegengesetzten Richtung, d.h. nach oben, zu einer Verschiebung der Sattelstütze 2 nach unten führt. Das Aus- und Einfahren, bzw. das Hoch- und Niederfahren der Sattelstütze 2 kann so oft wiederholt werden, solange der Druck der im Druckbehälter 4 gespeicherten Druckluft genügend hoch ist, um in der ersten Druckkammer 330 eine genügend grosse Druckkraft zu erzeugen welche auf den Kolben 33 wirkt, um die Reibungs- und Gewichtskräfte der Sattelstütze und der daran angeordneten Bestandteile zu überwinden.

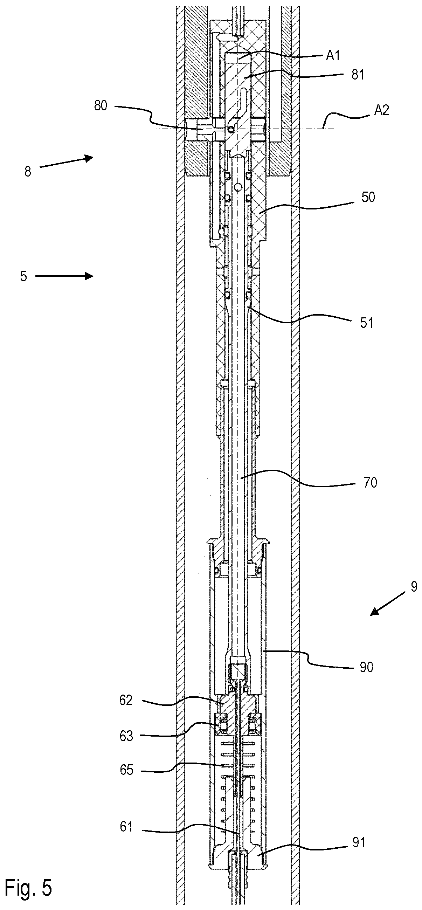

Die Figur 5 zeigt einen Rückstellmechanismus für eine erfindungsbemässe Sattelstützenanordnung. Am freien Ende des Ventilstössels 51, welches dem Verstellelement 81 gegenüberliegt, ist eine Endbefestigung 62 für die Kraftübertragung 61, d.h. für den Bowdenzug vorgesehen. Die Endbefestigung 62 ist mit einem Gewindezapfen in den Ventilstössel 51 eingeschraubt. Ein bezüglich der ersten Achse A1 umlaufender Flansch schlägt an der Stirnseite des Ventilstössels an und erstreckt sich seitlich über den Umfang des Ventilstössels. Auf der dem Gewindezapfen gegenüberliegenden Seite ist ein Zapfen für die Aufnahme und Befestigung des Endstückes des Bowdenzuges vorgesehen. Auf der dem Ventilstössel 51 abgewandten Seite des Flansches ist ein Anschlag 63 für eine Feder 65 vorgesehen. Der Anschlag weisen eine kreisförmige Scheibe mit einem zentrischen Durchgang auf, an deren Umfang sich ein Kragen von der Scheibe in der Richtung der ersten Achse A1 erstreckt. Die Scheibe des Anschlags 63 schlägt mit ihrer dem Kragen gegenüberliegenden Seite am Flansch der Endbefestigung 62 an und umgibt den Zapfen für die Aufnahme des Bowdenzuges. Eine Feder 65 erstreckt sich vom ersten Anschlag 63 entlang der ersten Achse A1. Am freien Ende des Ventilkörpers 50 ist an dessen Aussenseite eine Fixierung 9 in der Form eines Fixierrohres 90 angeordnet. Das Fixierrohr 90 weist an beiden freien Enden ein Innengewinde auf. Mit einem ersten Innengewinde ist das Fixierrohr auf den Ventilkörper 50 aufgeschraubt. In das zweite Innengewinde ist ein Rohrverschluss 91 eingeschraubt, wobei der Rohrverschluss 91 eine zentrische Durchgangsöffnung für den Bowdenzug und eine daneben angeordnete Durchgangsöffnung für eine Druckleitung aufweist. Das Fixierrohr 90 umgibt die Endbefestigung 62, den Anschlag 63, sowie die Feder 65 vollständig. Beispielsweise wird durch das Ziehen am Bowdenzug 61 die Endbefestigung 62 zum Rohrverschluss 91 hin verschoben, wodurch der erste Anschlag 63 mit verschoben wird, wodurch die zwischen dem Rohrverschluss 91 und dem ersten Anschlag 63 befindliche Feder 65 zusammengedrückt wird. Wenn der Bowdenzug losgelassen wird, wird die Endbefestigung 62 wieder in ihre ursprüngliche Mittelstellung gedrückt.

### BEZUGSZEICHENLISTE

| | | | |
|---|---|---|---|
| 1 | Fahrradrahmen | 50 | Ventilkörper |
| 10 | Oberrohr | 51 | Ventilstössel |
| 11 | Unterrohr | 52 | erster Kanal |
| 12 | Sitzrohr | 520 | Bohrung |
| 13 | Steuerrohr | 54 | Druckreduzierventil |
| 2 | Sattelstütze | 6 | Ventilbetätigung |
| 20 | Positionsbohrung | 60 | Bedienelement |
| 21 | Positionsbohrung | 61 | Kraftübertragung |
| 22 | Ausnehmung | 62 | Endbefestigung |
| 3 | Pneumatikzylinder | 63 | Anschlag |
| 30 | Zylinderrohr | 65 | Feder |
| 300 | Federgehäuse | 70 | Zufuhrleitung |
| 31 | Zylinderkopf | 700 | Bohrung |
| 32 | Zylinderboden | 71 | erste Leitung |
| 33 | Kolben | 8 | Arretiervorrichtung |
| 330 | erste Kammer | 80 | Verriegelungsbolzen |
| 331 | zweite Kammer | 81 | Verstellelement |
| 34 | Kolbenstange | 82 | Führungsnut |
| 38 | Druckfeder | 83 | Führungsbolzen |
| 4 | Druckbehälter | 9 | Fixierung |
| 40 | Füllventil | 90 | Fixierrohr |
| 5 | Regelventil | 91 | Rohrverschluss |
| A1 | erste Achse | P1 | erste Position |
| A2 | zweite Achse | P2 | zweite Position |
| P0 | Initialposition | | |

## Patentansprüche

1. Eine verstellbare Sattelstützenanordnung, umfassend:
eine Sattelstütze (2);
einen Pneumatikzylinder (3);
einen Druckbehälter (4);
ein Regelventil (5); und
eine Ventilbetätigung (6);
eine Arretiervorrichtung (8);
wobei sich die Sattelstütze (2) und der Pneumatikzylinder (3) entlang einer ersten Achse (A1) erstrecken, wobei die Sattelstütze (2) mit einem Zylinderrohr (30) des Pneumatikzylinders (3) wirkverbunden ist,
wobei der Pneumatikzylinder (3) eine erste Kammer (330) umfasst, welche sich auf einer Seite eines Kolbens (33) befindet und eine offene zweite Kammer (331) umfasst, welche sich auf einer gegenüberliegenden Seite des Kolbens (33) befindet,
wobei das Regelventil (5) über die Ventilbetätigung (6) betätigbar ist, wobei Druckluft vom Druckbehälter (4) über Leitungen (70;71) und das Regelventil (5) der ersten Kammer (330) zuführbar ist, wobei eine erste Leitung (71) vom Regelventil (5) zur ersten Kammer (330) führt und wobei in der offenen zweiten Kammer (331) eine Druckfeder (38) vorgesehen ist, welche sich in der Richtung der ersten Achse (A1) erstreckt und welche auf den Kolben (33) wirkt,
**dadurch gekennzeichnet, dass** die Arretiervorrichtung (8) einen Verriegelungsbolzen (80) und ein Verstellelement (81) umfasst, welche derart ausgebildet sind, dass eine Verschiebung des Verstellelements (81) entlang der ersten Achse (A1) zu einer Verschiebung des Verriegelungsbolzens (80) in einer zur ersten Achse (A1) senkrechten zweiten Achse (A2) führt, wobei der Verriegelungsbolzen (80) in einer Fixierstellung in einer Positionsbohrung (20,21) der Sattelstütze (2) angeordnet ist und wobei der Verriegelungsbolzen (80) in einer Freistellung ausserhalb der Positionsbohrungen (20,21) angeordnet ist,
und dass das Verstellelement (81) mit einem Betätigungselement (51) des Regelventils (5) wirkverbunden ist, sodass bei einer Betätigung des Betätigungselements (51) gleichzeitig das Verstellelement (81) betätigbar ist.

2. Die Sattelstützenanordnung gemäss Anspruch 1, wobei die erste Leitung (71) einen Abschnitt umfasst, der durch eine Kolbenstange (34) des Pneumatikzylinders (3) geführt ist.

3. Die Sattelstützenanordnung gemäss Anspruch 1 oder 2, wobei in einer ersten Endstellung des Regelventils (5) und in einer Mittelstellung des Regelventils (5) die erste Kammer (330) über die erste Leitung (71) mit der Umgebung verbunden ist und in einer der ersten Endstellung entgegengesetzten zweiten Endstellung des Regelventils (5) die erste Kammer (330) über die erste Leitung (71) und eine Zufuhrleitung (70) mit dem Druckbehälter (4) verbunden ist.

4. Die Sattelstützenanordnung gemäss einem der vorangehenden Ansprüche, wobei die Ventilbetätigung (6) ein von einem Benutzer bedienbares Bedienelement (60) umfasst und eine Kraftübertragung (61) umfasst, mit welcher eine vom Benutzer beim Bedienelement (60) erzeugte Kraft zum Regelventil (5) übertragbar ist, um dieses zu betätigen.

5. Die Sattelstützenanordnung gemäss Anspruch 4, wobei die Kraftübertragung (61) einen Bowdenzug oder eine Druckleitung umfasst.

6. Die Sattelstützenanordnung gemäss einem der Ansprüche 1 bis 3, wobei die Ventilbetätigung (6) ein von einem Benutzer bedienbares Bedienelement (60), einen Ventilaktuator und eine drahtlose Signalübertragung umfasst, mit welcher eine vom Benutzer mit dem Bedienelement (60) erzeugtes Signal zum Ventilaktuator übertragbar ist und durch diesen das Regelventil (5) betätigbar ist.

7. Die Sattelstützenanordnung gemäss einem der Ansprüche 4 bis 6, wobei das Bedienelement (60) einen Hebel, einen Drehring, mindestens einen Schalter oder mindestens zwei Druckknöpfe umfasst.

8. Die Sattelstützenanordnung gemäss einem der vorangehenden Ansprüche, wobei mindestens eine Feder (65) vorgesehen ist, welche auf das Regelventil (5) einwirken kann und dieses entlang der ersten Achse (A1) in eine vorbestimmte Lage drücken kann.

9. Die Sattelstützenanordnung gemäss Anspruch 1, wobei in einer Initialposition (P0) des Bedienelements (60), das Regelventil (5) die erste Endstellung umfasst und der Verriegelungsbolzen (80) die Fixierstellung umfasst, wobei in einer ersten Position (P1) des Bedienelements (60), das Regelventil (5) die Mittelstellung umfasst und der Verriegelungsbolzen (80) die Freistellung umfasst, und wobei in einer zweiten Position (P2) des Bedienelements (60), das Regelventil (5) die zweite Endstellung umfasst und der Verrieglungsbolzen (80) die Freistellung umfasst.

10. Ein Fahrradrahmen (1) mit einer Sattelstützenanordnung gemäss einem der vorangehenden Ansprüche, wobei diese mit einer Fixierung (9) in einem Sitzrohr (12) des Fahrradrahmens (1) befestigt ist.

11. Der Fahrradrahmen (1) gemäss Anspruch 10, wobei die Fixierung (9) am Regelventil (5) der Sattelstützenanordnung angeordnet ist.

12. Der Fahrradrahmen (1) gemäss Anspruch 10 oder 11, wobei der Druckbehälter (4) gemeinsam einstückig mit einem Unterrohr (11) des Rahmens (1) ausgebildet ist.

13. Der Fahrradrahmen (1) gemäss einem der Ansprüche 10 bis 12, wobei die Leitungen (70;71) und/oder die Kraftübertragung (61) zumindest teilweise im Rahmeninnern führbar sind/ist.

## Claims

1. An adjustable seat post assembly comprising:
a seat post (2);
a pneumatic cylinder (3);
a pressure vessel (4);
a control valve (5); and
a valve actuator (6);
a locking device (8);
wherein the seat post (2) and the pneumatic cylinder (3) extend along a first axis (A1), the seat post (2) being operatively connected to a cylinder tube (30) of the pneumatic cylinder (3),
wherein the pneumatic cylinder (3) comprises a first chamber (330), which is located on one side of a piston (33), and an open second chamber (331), which is located on an opposite side of the piston (33),
wherein the control valve (5) can be actuated via the valve actuator (6), wherein compressed air can be supplied from the pressure vessel (4) via lines (70;71) and the control valve (5) to the first chamber (330), wherein a first line (71) leads from the control valve (5) to the first chamber (330) and wherein a compression spring (38) is provided in the open second chamber (331), which extends in the direction of the first axis (A1) and which acts on the piston (33),
**characterized in that** the locking device (8) comprises a locking bolt (80) and an adjusting element (81) which are designed in such a way that a displacement of the adjusting element (81) along the first axis (A1) leads to a displacement of the locking bolt (80) in a second axis (A2) perpendicular to the first axis (A1), wherein the locking bolt (80) is arranged in a fixing position in a positioning bore (20,21) of the seat post (2) and wherein the locking bolt (80) is arranged in a free position outside the positioning bores (20,21),
and **in that** the adjusting element (81) is operatively connected to an actuating element (51) of the control valve (5), so that when the actuating element (51) is actuated, the adjusting element (81) can be actuated at the same time.

2. The seat post assembly according to claim 1, wherein the first line (71) comprises a portion which is guided by a piston rod (34) of the pneumatic cylinder (3).

3. The seat post assembly according to claim 1 or 2, wherein in a first end position of the control valve (5) and in a middle position of the control valve (5) the first chamber (330) is connected to the environment via the first line (71) and in a second end position of the control valve (5) opposite to the first end position the first chamber (330) is connected to the pressure vessel (4) via the first line (71) and a supply line (70).

4. The seat post assembly according to any one of the preceding claims, wherein the valve actuator (6) comprises a user operable control element (60) and comprises a power transmission (61) by which a force generated by the user at the control element (60) is transmittable to the control valve (5) to actuate the same.

5. The seat post assembly according to claim 4, wherein the power transmission (61) comprises a Bowden cable or a pressure line.

6. The seat post assembly according to any one of claims 1 to 3, wherein the valve actuator (6) comprises a user-operable control element (60), a valve actuator and a wireless signal transmission by which a signal generated by the user with the control element (60) can be transmitted to the valve actuator and by which the control valve (5) can be actuated.

7. The seat post assembly according to any one of claims 4 to 6, wherein the control element (60) comprises a lever, a rotating ring, at least one switch or at least two push buttons.

8. The seat post arrangement according to any one of the preceding claims, wherein at least one spring (65) is provided which can act on the control valve (5) and can press it along the first axis (A1) into a predetermined position.

9. The seat post assembly according to claim 1, wherein in an initial position (P0) of the control element (60), the control valve (5) comprises the first end position and the locking bolt (80) comprises the fixing position, wherein in a first position (P1) of the control element (60), the control valve (5) comprises the center position and the locking bolt (80) comprises the release position, and wherein in a second position (P2) of the control element (60), the control valve (5) comprises the center position and the locking bolt (80) comprises the release position, the control valve (5) comprises the middle position and the locking bolt (80) comprises the release position, and wherein in a second position (P2) of the operating element (60), the control valve (5) comprises the second end position and the locking bolt (80) comprises the release position.

10. A bicycle frame (1) with a seat post assembly according to one of the preceding claims, wherein the seat post assembly is fastened with a fixation (9) in a seat tube (12) of the bicycle frame (1).

11. The bicycle frame (1) according to claim 10, wherein the fixation (9) is arranged on the control valve (5) of the seat post assembly.

12. The bicycle frame (1) according to claim 10 or 11, wherein the pressure vessel (4) is formed integrally in a single piece with a down tube (11) of the frame (1).

13. The bicycle frame (1) according to any one of claims 10 to 12, wherein the lines (70;71) and/or the power transmission (61) are/is at least partially guideable inside the frame.

## Revendications

1. Un ensemble de tige de selle réglable, comprenant :
une tige de selle (2) ;
un vérin pneumatique (3) ;
un réservoir sous pression (4) ;
une soupape de régulation (5) ; et
un actionneur de soupape (6) ;
un dispositif d'arrêt (8) ;
la tige de selle (2) et le vérin pneumatique (3) s'étendant le long d'un premier axe (A1), la tige de selle (2) étant reliée fonctionnellement à un tube cylindrique (30) du vérin pneumatique (3),
dans lequel le vérin pneumatique (3) comprend une première chambre (330) située d'un côté d'un piston (33) et une deuxième chambre ouverte (331) située d'un côté opposé du piston (33),
la soupape de régulation (5) pouvant être actionnée par l'intermédiaire de l'actionneur de soupape (6), de l'air comprimé pouvant être amené du réservoir sous pression (4) à la première chambre (330) par l'intermédiaire de conduites (70;71) et de la soupape de régulation (5), une première conduite (71) menant de la soupape de régulation (5) à la première chambre (330) et un ressort de compression (38) étant prévu dans la deuxième chambre ouverte (331), lequel s'étend dans la direction du premier axe (A1) et agit sur le piston (33),
**caractérisé en ce que** le dispositif d'arrêt (8) comprend un boulon de verrouillage (80) et un élément de réglage (81) qui sont conçus de telle sorte qu'un déplacement de l'élément de réglage (81) le long du premier axe (A1) entraîne un déplacement du boulon de verrouillage (80) dans un deuxième axe (A2) perpendiculaire au premier axe (A1),
le boulon de verrouillage (80) étant disposé dans une position de fixation dans un alésage de position (20, 21) du tige de selle (2) et le boulon de verrouillage (80) étant disposé dans une position libre en dehors des alésages de position (20, 21),
et **en ce que** l'élément de réglage (81) est en liaison active avec un élément d'actionnement (51) de la soupape de régulation (5), de sorte que lors d'un actionnement de l'élément d'actionnement (51), l'élément de réglage (81) peut être actionné simultanément.

2. L'ensemble de tige de selle selon la revendication 1, dans lequel le premier conduit (71) comprend une partie qui est guidée par une tige de piston (34) du vérin pneumatique (3).

3. L'ensemble de support de selle selon la revendication 1 ou 2, dans lequel, dans une première position d'extrémité de la soupape de régulation (5) et dans une position médiane de la soupape de régulation (5), la première chambre (330) est reliée à l'environnement par le biais du premier conduit (71) et, dans une deuxième position d'extrémité de la soupape de régulation (5) opposée à la première position d'extrémité, la première chambre (330) est reliée au réservoir sous pression (4) par le biais du premier conduit (71) et d'un conduit d'alimentation (70).

4. L'ensemble tige de selle selon l'une quelconque des revendications précédentes, dans lequel l'actionneur de valve (6) comprend un élément de commande (60) pouvant être manipulé par un utilisateur et comprend une transmission de force (61) permettant de transmettre une force générée par l'utilisateur au niveau de l'élément de commande (60) à la soupape de régulation (5) afin de l'actionner.

5. L'ensemble de tige de selle selon la revendication 4, dans lequel la transmission de force (61) comprend un câble Bowden ou une conduite de pression.

6. L'ensemble de tige de selle selon l'une des revendications 1 à 3, dans lequel l'actionneur de soupape (6) comprend un élément de commande (60) pouvant être manipulé par un utilisateur, un actionneur de soupape et une transmission de signal sans fil, avec laquelle un signal généré par l'utilisateur avec l'élément de commande (60) peut être transmis à l'actionneur de soupape et par lequel la soupape de régulation (5) peut être actionnée.

7. L'ensemble tige de selle selon l'une des revendications 4 à 6, dans lequel l'élément de commande (60) comprend un levier, une bague rotative, au moins un interrupteur ou au moins deux boutons-poussoirs.

8. L'ensemble tige de selle selon l'une des revendications précédentes, dans lequel il est prévu au moins un ressort (65) apte à agir sur la soupape de régulation (5) et à la pousser dans une position prédéterminée le long du premier axe (A1).

9. L'agencement de tige de selle selon la revendication 1, dans lequel, dans une position initiale (P0) de l'élément de commande (60), la soupape de régulation (5) comprend la première position finale et le boulon de verrouillage (80) comprend la position de fixation, dans lequel, dans une première position (P1) de l'élément de commande (60), la soupape de régulation (5) comprend la position centrale et le boulon de verrouillage (80) comprend la position libre, et dans une deuxième position (P2) de l'élément de commande (60), la soupape de régulation (5) comprend la deuxième position finale et le boulon de verrouillage (80) comprend la position libre.

10. Un cadre de bicyclette (1) avec un ensemble de tige de selle selon l'une des revendications précédentes, dans lequel celui-ci est fixé par une fixation (9) dans un tube de selle (12) du cadre de bicyclette (1).

11. Le cadre de bicyclette (1) selon la revendication 10, dans lequel la fixation (9) est disposée sur la soupape de régulation (5) de l'ensemble tige de selle.

12. Le cadre de bicyclette (1) selon la revendication 10 ou 11, dans lequel le réservoir sous pression (4) est formé conjointement d'une seule pièce avec un tube inférieur (11) du cadre (1).

13. Le cadre de bicyclette (1) selon l'une des revendications 10 à 12, dans lequel les conduites (70 ; 71) et/ou la transmission de force (61) peuvent être guidées au moins partiellement à l'intérieur du cadre.
